# EUROPEAN PATENT SPECIFICATION

(11) **EP 3 607 827 B1**
(45) Date of publication and mention of the grant of the patent: **06.10.2021**
(21) Application number: 19162817.1
(22) Date of filing: 14.03.2019
(51) Int. Cl.: A22C 17/14

(54) **NATURAL FAT END AND AFTER END CASING, PROCESS FOR ITS OBTENTION AND USE THEREOF**
NATÜRLICHE FETTENDE UND NACHENDE DARMHÜLLE, VERFAHREN ZU IHRER HERSTELLUNG, SOWIE VERWENDUNG DAVON
BOYAU NATUREL DE FUSEAU OU ROSETTES, PROCÉDÉ POUR SON OBTENTION ET UTILISATION DU MÊME

(30) Priority: 10.08.2018 ES 201830819
(43) Date of publication of application: 12.02.2020
(73) Proprietor: Grupo Caro Salmeron, S.L.U., 18800 Baza (ES)
(72) Inventor: CARO SALMERÓN, Antonio, 18800 Baza (ES)
(74) Representative: Ponti & Partners, S.L.P

(56) References cited:
- WO-A1-2014/016636
- CN-A- 107 114 451
- DE-C- 652 793
- DE-C- 697 254
- GB-A- 1 057 228
- Elisabet Moya Romera: "Ecotrip -REMOJO DE LAS TRIPAS NATURALES - Ecotrip -", , 7 July 2015 (2015-07-07), XP055643933, Retrieved from the Internet: URL:https://web.archive.org/web/2016081706 3602/http://ecotrip.es/metodo-de-remojo-de -las-tripas-naturales [retrieved on 2019-11-19]
- European Natural Sausage Casings Association Ensca: "COMMUNITY GUIDE to GOOD PRACTICE for Hygiene and the application of the HACCP principles in the production of natural sausage casings", , 1 January 2017 (2017-01-01), XP055643688, Brussels Retrieved from the Internet: URL:https://ec.europa.eu/food/sites/food/f iles/safety/docs/biosafety_fh_guidance_gui de_good-practice-haccp-ensca.pdf [retrieved on 2019-11-18]

## Description

### Field of the invention

The present invention relates to the field of casings for sausage and in particular it relates to a process for obtaining natural fatend or afterend casing with the characteristics of a homogeneous diameter (caliber), absence of strange odors, absence of strange flavors, higher strength, higher elasticity, bacterial purity and easy handling.

### Background of the invention

Fatend or afterned casings from livestock, and in particular, hog fatends or afterneds, are usually used for sausage manufacturing, as a cylindrical wrapper of natural origin that allows to shape and protect sausage and food products. It is also used as raw material for some types of sausages and as main ingredient of some dishes in different countries. The large intestine from cattle, unlike the small intestine, has the peculiarity that the sections of large intestine are presented forming loops or folds that are joined together forming a compact intestinal package. Another peculiarity of the large intestine is that the dents or bags of intestine walls provide a characteristic appearance. In the case of pigs, these dents or bags are particularly abundant and can present accumulation of fats and bacteria.

Currently, said fatend or afterned casing is subjected to a treatment with salt and because of the characteristics of the intestinal part this casing belongs to, it has a characteristic strong and quite unpleasant odor. Consequently, workers of sausage factories must remove the salt residues from the product, before using it, by applying water and changing it several times to ensure a proper cleaning. Obviously, this entails a waste of time and a high water consumption. Sometimes, in addition to the process indicated for the elimination of salt, natural deodorants products, such as, for example, lemon, vinegar, spices, garlic can be added. However, final results are usually not as expected as the characteristic odor of the product persists.

At the same time, the current traditional fatend or afterend casings have a very irregular and non-homogeneous diameter, which makes their use in production very complex, requiring very experienced personnel for correctly stuffing the pieces. Additionally, these irregularities of the original fatend or afterend casings and fat areas inside complicate a lot their correct drying within curing and maturing process of the product.

Document DE 652 793 C discloses a process for the production of casings for sausages.

In the light of all these problems, the present inventors have developed a new process for obtaining natural fatend or afterend casing with the characteristics of a homogenous diameter, absence of strange odors, absence of strange flavors, higher strength, higher elasticity, bacterial purity and easy handling.

### Brief description of the drawings

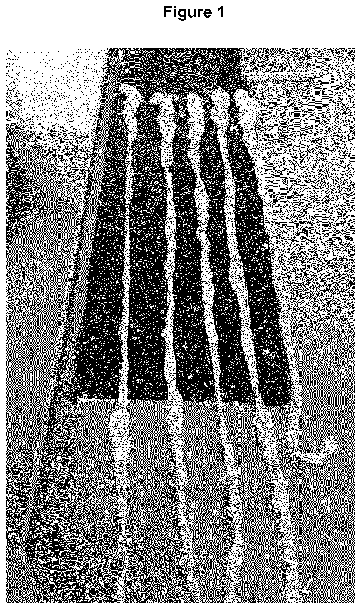

Figure 1 shows a natural casing, whose strands are dirty, give off a bad smell, have a non-homogenous length and diameter and have also pieces of fat.

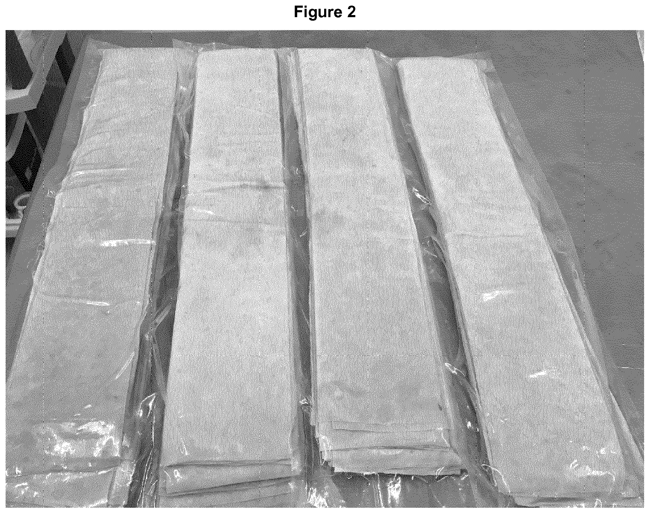

Figure 2 shows the final appearance of the fatend or afterend casing obtained by the present invention, wherein clean pieces with a homogeneous diameter and length, in addition to absence of characteristic unpleasant odors for this type of casing, are shown.

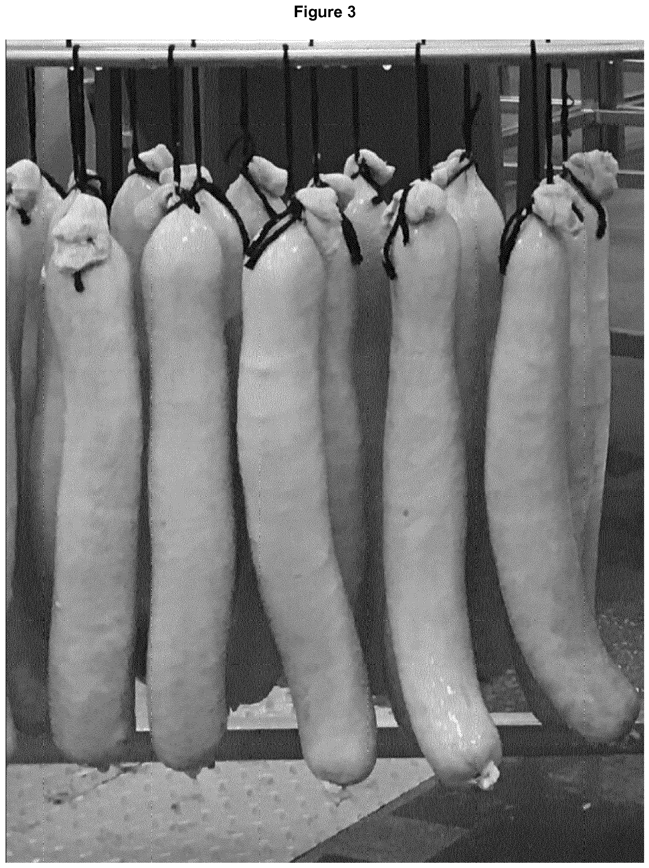

Figure 3 shows sausage obtained using fatend or afterend casing by a process which does not correspond to the present invention. As it is shown they have an irregular shape.

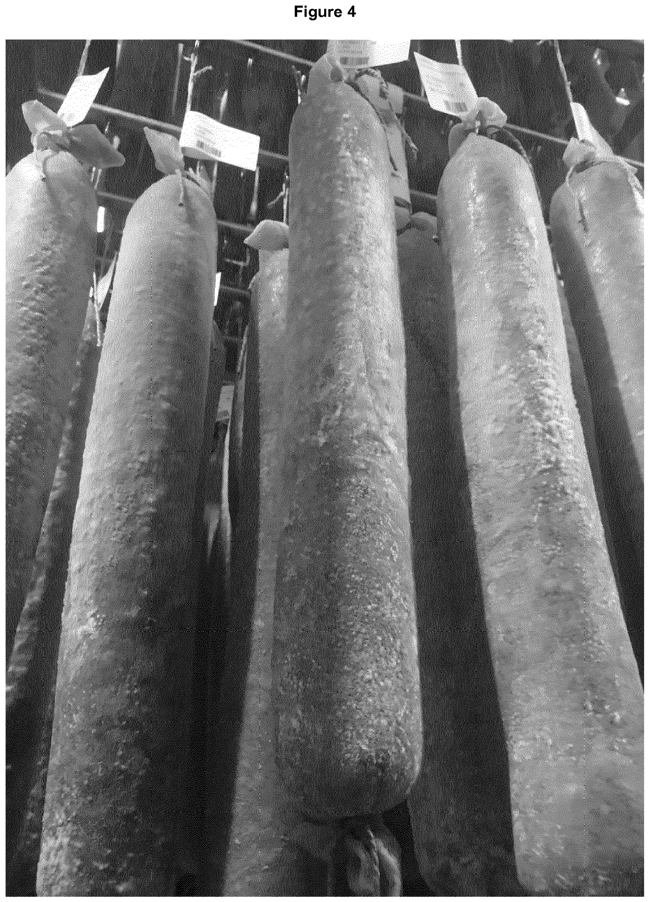

Figure 4 shows sausage obtained using fatend or afterend casing of the present invention. As it is shown, the pieces are perfect, straight and with a perfect caliber which allows a perfect curing process.

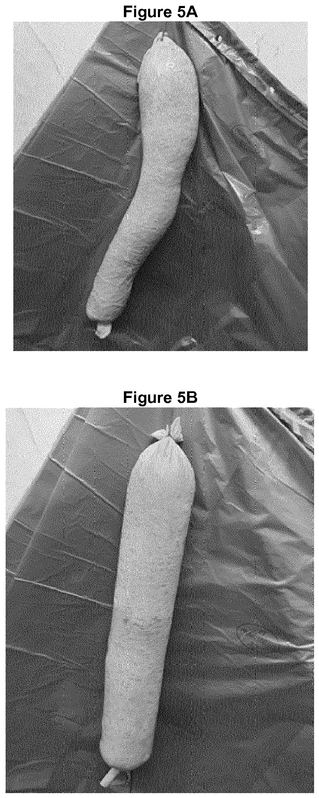

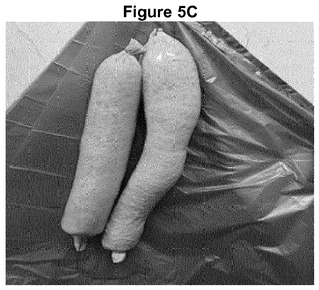

Figure 5A shows a traditional stuffed fatend casing. Figure 5B shows a stuffed fatend or afterend casing manufactured by the present invention. Figure 5C shows the visual comparison of the traditional stuffed fatend casing (right) and the stuffed fatend or afterend casing manufactured by the present invention (left).

### Summary of the invention

In a first aspect, the present invention relates to a process for obtaining a natural fatend or afterend casing.

In a second aspect, the present invention relates to a natural fatend or afterend casing obtained by a process according to the first aspect.

In a third aspect, the present invention relates to the use of a natural fatend or afterend casing obtained according to the first aspect for obtaining a sausage, preferably sausages made of meat.

In a fourth aspect, the present invention relates to a sausage, preferably made of meat, comprising the natural fatend or afterend casing obtained according to the first aspect as a sausage peeling.

In a fifth aspect, the present invention relates to a process for obtaining a sausage, preferably made of meat, comprising the preparation of a natural fatend or afterend casing according to the first aspect.

### Detailed description of the invention

The present invention relates in a first aspect to a process for obtaining a natural fatend or afterend casing from an animal, comprising the step a) of desalting the natural fatend or afterend casing with water and it is characterized by comprising the following steps:
b) turning inside out the natural fatend or afterend casing to carry out the cleaning of fat inside;
c) soaking the natural fatend or afterend casing in hot water between 15°C and 40°C;
d) soaking the natural fatend or afterend casing obtained in step c) in cold water between 0°C and 5°C;
e) turning outside in the natural fatend or afterend casing obtained in step d) and placing said casing on a mold;
g) dehydrating the natural fatend or afterend casing in the oven at a temperature between 15°C and 70°C until the desired size is achieved.

By "fatend casing" is meant the casing corresponding to the final section of the large intestine of the animal, preferably pig, that is to say the part of the colon + caecum + rectum + anal canal. Likewise, "afterend casing" is understood as the casing corresponding to the final section of the large intestine of the animal, preferably pig, from which the anal canal has been extracted.

Although in the present invention the fatend or afterend casing is preferably of porcine origin, it is possible to obtain it from other animals, such as sheep, bovine or caprine animals.

In the present invention, "pig", "hog" or "of porcine origin" is understood to include, without limitation, both pigs and sows.

By "natural" it is understood that said fatend or afterend casing has been extracted from livestock, for example sheep, bovine, porcine or caprine and has been subjected to a cleaning and salting prior to its preservation. Preferably said livestock is of porcine origin.

By means of step c) it is possible to ensure the correct cleaning of the pieces of fat, making it easier to peel off and, in this way, a large part of the unpleasant odors originally present in the original casing is removed.

Step d) aims to finalize the cleaning of fat.

It is possible that due to the needs of the final client to whom the product is intended, the mold of step e) is preferably adjusted to the desired casing diameter or size, for example, 50 mm, 60 mm, etc. Said mold has a substantially tubular structure of circular section, preferably a tube, and is configured to support the natural fatend or afterend casing, preferably of porcine origin, already clean and defatted.

Likewise, it is possible that the length of the final piece of natural fatend or afterend casing, preferably of porcine origin, has the length as required by a final client and may be, for example, 50 cm, 60 cm, 90 cm, etc. For this, the number of pieces of natural fatend or afterend casing, preferably of porcine origin, to be placed on the mold may vary and can be in number as many as necessary to achieve the desired length of a final product. To achieve said required length, the different pieces of natural fatend or afterend casing, preferably of porcine origin, are placed, one after the other with a small overlapping, for example, approximately 1 or 2 cm. During step g) of dehydration, this overlapping will put together different pieces. In one embodiment, a single piece of fatend or afterend casing is placed on the mold. In another embodiment, two pieces of fatend or afterend casing are placed on the mold. In another further embodiment, three or more pieces of fatend or afterend casing are placed on the mold.

Additionally, the curing and maturation processes of a sausage, preferably made of meat, will be fixed by the final client depending on the needs of the product. In this way, if a low cure is desired, only one piece of fatend or afterend casing will be needed on the mold. If, on the other hand, a medium cure is desired, two pieces of fatend or afterend casing will be needed on the mold, one over the other, to make the product thicker and to slow down the dehydration. Finally, if a longer cure is desired, three or more pieces of fatend or afterend casing will should be on the mold, one over the other, to make the product thicker and to further slowdown the dehydration. In general, the more pieces of casing are used the longer the curing time will be.

Step g) is preferably carried out for a period from 30 min to 2 hours. In the oven, hydration can be controlled using a suitable time, temperature and air speed depending on the casings.

In a second aspect, the present invention relates to a natural fatend or afterend casing obtained by a process according to any of the embodiments indicated above alone or in combination.

In a third aspect, the present invention relates to the use of a natural fatend or afterend casing obtained according to any of the embodiments indicated above alone or in combination for obtaining sausages, preferably made of meat.

In a fourth aspect, the present invention relates to a sausage, preferably made of meat, comprising the natural fatend or afterend casing obtained according to any of the embodiments indicated above alone or in combination, as a sausage peeling. By way of example, the following sausages, preferably made of meat, prepared from fatend or afterend casing of the present invention, can be mentioned: fatend salami, fatend loin, fatend "chorizo".

In a fifth aspect, the present invention relates to a process for obtaining a sausage, preferably made of meat, comprising:
a) obtaining a natural fatend or afterend casing, as defined in any of the embodiments of the present invention;
b) soaking the natural fatend or afterend casing obtained in the step a);
c) introducing the food dough, preferably made of meat, into the natural fatend or afterend casing obtained in step b).

The soaking conditions (hydration) in step b) depend on the type of casing. For example:
- sheep casing: at 30-35°C;
- casing of porcine origin other than caecum, fatend and bladder: at 30-35°C
- casing of bovine origin: cold water (0-5°C) and then 30-35°C;
- dry casing: warm water (15-25°C);
- casing from caecum, fatend and bladder of porcine origin: cold water (0-5°C) and then 30-35°C.

In any case, the soaking temperature of the casing cannot exceed 35°C. In the case of dry casing which is difficult to hydrate, lactate or polyphosphates can be added. In case of excessive hydration, organic acids can be added to counteract this excess.

One or further examples which intend to illustrate the invention will be now provided and, in no way, limit the scope of the invention, which is well established by the appended claims.

### EXAMPLES

### Example 1. Preparation of traditional fatend casing

Two hanks of fatend casing, diameter (caliber) 55/60 of 60 centimeters, were prepared and with the following steps:
Desalting process:
1. The hanks were placed in clean water, 20 liters, for removing the salt, making 4 changes of water, until the casings were perfectly desalted.
2. Deodorization: The desalted hanks were introduced in a container with clean water, 20 liters, accompanied by different types of aromatic herbs, lemon and garlic in order to eliminate the characteristic odors of the product since these are very unpleasant.

In many cases this process is not 100% effective and causes the odors to persist and be noticeable in the finished product, that is to say that in the sausage used with this type of casing.

### Example 2. Preparation of natural fatend or afterend casing according to the invention

Two hog hanks of an approximate length between 50 and 70 mm, and preserved in salt, were prepared. They were placed in clean water, 20 liters to remove the salt, the water was changed 4 times, until the casings were perfectly desalted.

The already desalted strands were taken and the process of cleaning the inside fat of the pieces started. They were turned inside out and introduced into water at 35°C. With this water temperature, the fatend casing strands are virtually completely clean in a very simple way.

They were then introduced into water at 5°C to make the pieces perfectly clean of fat.

They were then put on a 60 mm diameter mold for a long cure. Fatend casings were placed on the mold two by two one over the other.

The molds were then placed into the oven for 2 hours and at a temperature of 40°C.

The pieces were taken out from the molds and cut into pieces of 60 centimeters.

The obtained casings do not need to be salted. After soaking in warm water, they are ready to use.

### Differences between the traditional fatend casing and the fatend or afterend casing in the process of stuffing

### Traditional fatend casing

They have a non-homogeneous diameter (caliber), which causes problems while stuffing and later in drying.

On the other hand, the pieces of fat inside, characteristic to this type of product, involve strange flavors and odors, even though the steps for their elimination are carried out in a very exhaustive way.

### Fatend or afterend casing of the invention

After using the fatend or afterend casing of the invention in stuffing processes, the benefits obtained after its use can be evidenced since it has a homogeneous caliber and is easy to handle, which eliminates the problems during stuffing processes and increase the speed thereof.

## Claims

1. A process for obtaining a natural fatend or afterend casing from an animal, comprising the step of a) desalting the natural fatend or afterend casing with water and it is **characterized by** comprising the following steps:
b) turning inside out the natural fatend or afterend casing to clean an inside fat;
c) soaking the natural fatend or afterend casing in hot water between 15°C and 40°C;
d) soaking the natural fatend or afterend casing obtained in step c) in cold water between 0°C and 5°C;
e) turning outside in the natural fatend or afterend casing obtained in step d) and placing said casing on a mold;
g) dehydrating the natural fatend or afterend casing in the oven at a temperature between 15°C and 70°C until the desired size is achieved.

2. Process according to claim 1, wherein said animal is a pig.

3. Process according to any of claims 1 or 2, **characterized in that** the step g) is carried out for a period from 30 minutes to 2 hours.

4. Process according to any of claims 1 to 3, **characterized in that** the mold in step e) is adjusted to the required casing diameter.

5. Process according to any of the preceding claims, **characterized in that** a single piece of fatend or afterend casing is placed on the mold.

6. Process according to any of claims 1 to 4, **characterized in that** two pieces of fatend or afterend casing are placed on the mold.

7. Process according to any of claims 1 to 4, **characterized in that** three or more pieces of fatend or afterend casing are placed on the mold.

8. Natural fatend or afterend casing obtained by a process according to any of claims 1 to 7.

9. Use of the natural fatend or afterend casing, according to claim 8, for obtaining sausages.

10. Sausage comprising the natural fatend or afterend casing, according to claim 8, as a sausage peeling.

11. Sausage, according to claim 10, which is fatend loin, fatend salami or fatend "chorizo".

12. A process for obtaining a sausage, comprising:
a) obtaining a natural fatend or afterend casing by means of a process according to any of claims 1 to 7;
b) soaking the natural fatend or afterend casing obtained in step a);
c) introducing the food dough into the natural fatend or afterend casing obtained in step b).

## Patentansprüche

1. Verfahren zur Herstellung eines Fettende- oder Nachende-Naturdarms eines Tiers, umfassend die Stufe a) Entsalzen des Fettende- oder Nachende-Naturdarms mit Wasser, **gekennzeichnet durch** die folgenden Stufen:
b) Wenden des Fettende- oder Nachende-Naturdarms zur Entfernung von Fett auf der Innenseite;
c) Einweichen des Fettende- oder Nachende-Naturdarms in warmem Wasser von 15 °C bis 40 °C;
d) Einweichen des in Stufe c) erhaltenen Fettende- oder Nachende-Naturdarms in kaltem Wasser von 0 °C bis 5 °C;
e) Wenden des in Stufe d) erhaltenen Fettende- oder Nachende-Naturdarms und Aufbringen des Darms auf eine Form;
g) Entwässern des Fettende- oder Nachende-Naturdarms in dem Ofen bei einer Temperatur von 15 °C bis 70 °C, bis die gewünschte Größe erreicht ist.

2. Verfahren nach Anspruch 1, wobei es sich bei dem Tier um ein Schwein handelt.

3. Verfahren nach einem der Ansprüche 1 oder 2, **dadurch gekennzeichnet, dass** die Stufe g) für einen Zeitraum von 30 Minuten bis 2 Stunden durchgeführt wird.

4. Verfahren nach einem der Ansprüche 1 bis 3, **dadurch gekennzeichnet, dass** die Form in Stufe e) an den benötigten Darmdurchmesser angepasst wird.

5. Verfahren nach einem der vorstehenden Ansprüche, **dadurch gekennzeichnet, dass** ein einzelnes Stück Fettende- oder Nachende-Naturdarm auf die Form aufgebracht wird.

6. Verfahren nach einem der Ansprüche 1 bis 4, **dadurch gekennzeichnet, dass** zwei Stücke Fettende- oder Nachende-Naturdarm auf die Form aufgebracht werden.

7. Verfahren nach einem der Ansprüche 1 bis 4, **dadurch gekennzeichnet, dass** drei oder mehr Stücke Fettende- oder Nachende-Naturdarm auf die Form aufgebracht werden.

8. Fettende- oder Nachende-Naturdarm, erhalten durch ein Verfahren nach eine der Ansprüche 1 bis 7.

9. Verwendung des Fettende- oder Nachende-Naturdarms nach Anspruch 8 zur Herstellung von Würsten.

10. Wurst, umfassend den Fettende- oder Nachende-Naturdarm nach Anspruch 8 als Wursthülle.

11. Wurst nach Anspruch 10, wobei es sich um Fettende-Loin, Fettende-Salami oder Fettende-"Chorizo" handelt.

12. Verfahren zur Herstellung von Wurst, umfassend:
a) Herstellen eines Fettende- oder Nachende-Naturdarms durch ein Verfahren nach einem der Ansprüche 1 bis 7;
b) Einweichen des in Stufe a) erhaltenen Fettende- oder Nachende-Naturdarms;
c) Einfüllen des Nahrungsmittelteigs in den in Stufe b) erhaltenen Fettende- oder Nachende-Naturdarm.

## Revendications

1. Processus d'obtention d'un boyau naturel « fatend » ou d'un boyau « afterend » à partir d'un animal, comprenant l'étape a) de dessalage du boyau naturel « fatend » ou du boyau « afterend » avec de l'eau, et **caractérisé en ce qu'**il comprend les étapes suivantes :
b) le retournement de l'intérieur vers l'extérieur du boyau naturel « fatend » ou du boyau « afterend » pour nettoyer une matière grasse intérieure ;
c) le trempage du boyau naturel « fatend » ou du boyau « afterend » dans de l'eau chaude entre 15 °C et 40 °C ;
d) le trempage du boyau naturel « fatend » ou du boyau « afterend » obtenu à l'étape c) dans de l'eau froide entre 0 °C et 5 °C ;
e) le retournement de l'extérieur vers l'intérieur du boyau naturel « fatend » ou du boyau « afterend » obtenu à l'étape d) et le placement dudit boyau sur un embout ;
f) la déshydratation du boyau naturel « fatend » ou du boyau « afterend » dans le four à une température comprise entre 15 °C et 70 °C jusqu'à ce que la taille souhaitée soit obtenue.

2. Processus selon la revendication 1, dans lequel ledit animal est un porc.

3. Processus selon l'une quelconque des revendications 1 ou 2, **caractérisé en ce que** l'étape g) est exécutée pendant une période de 30 minutes à 2 heures.

4. Processus selon l'une quelconque des revendications 1 à 3, **caractérisé en ce que** l'embout à l'étape e) est ajusté au diamètre souhaité du boyau.

5. Processus selon l'une quelconque des revendications précédentes, **caractérisé en ce qu'**une seule partie de boyau naturel « fatend » ou de boyau « afterend » est placée sur l'embout.

6. Processus selon l'une quelconque des revendications 1 à 4, **caractérisé en ce que** deux parties de boyau naturel « fatend » ou de boyau « afterend » sont placées sur l'embout.

7. Processus selon l'une quelconque des revendications 1 à 4, **caractérisé en ce qu'**au moins trois parties de boyau naturel « fatend » ou de boyau « afterend » sont placées sur l'embout.

8. Boyau naturel « fatend » ou boyau « afterend » obtenu par un processus selon l'une quelconque des revendications 1 à 7.

9. Utilisation du boyau naturel « fatend » ou du boyau « afterend », selon la revendication 8, pour obtenir des saucisses.

10. Saucisse comprenant le boyau naturel « fatend » ou le boyau « afterend », selon la revendication 8, comme un épluchage de saucisse.

11. Saucisse, selon la revendication 10, qui est de la longe de porc «fatend », du salami « fatend » ou du « chorizo » « fatend ».

12. Processus d'obtention d'une saucisse, comprenant :
a) l'obtention d'un boyau naturel « fatend » ou d'un boyau « afterend » au moyen d'un processus selon l'une quelconque des revendications 1 à 7 ;
b) le trempage du boyau naturel « fatend » ou du boyau « afterend » obtenu à l'étape a) ;
c) l'introduction de la pâte alimentaire dans le boyau naturel « fatend » ou dans le boyau « afterend » obtenu à l'étape b).
